# EUROPEAN PATENT APPLICATION

(11) **EP 4 723 307 A1**
(43) Date of publication of application: **08.04.2026**
(21) Application number: 25774908.5
(22) Date of filing: 14.03.2025
(51) Int. Cl.: H01M 10/6556, H01M 10/613, H01M 10/653, H01M 10/6551, H01M 10/625

(54) **COOLING STRUCTURE OF BATTERY PACK**

(30) Priority: 20.03.2024 KR 20240038147; 29.10.2024 KR 20240149590
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR)
(74) Representative: Plasseraud IP
(86) International application number: PCT/KR2025/003268
(87) International publication number: WO 2025/198248

(57) **Abstract**

Disclosed herein relates to a cooling structure of a battery pack including: a heat sink including a plurality of cooling flow paths; a plurality of battery assemblies mounted longitudinally and/or transversely on the heat sink; and a plurality of electrical components mounted on the heat sink, wherein at least one of the plurality of electrical components has an insulating oil sealed therein, and heat accumulating in the insulating oil is discharged to the outside via a cooling flow path of the heat sink.

## Description

### [Technical Field]

The present disclosure relates to a cooling structure of a battery pack in which a heat sink forming the bottom surface of the battery pack enables efficient cooling of the battery cells as well as the electrical components, thereby providing a battery pack with high performance.
This application claims the benefit of Korean Patent Application No. 10-2024-0038147, filed on March 20, 2024, and Korean Patent Application No. 10-2024-0149590, filed on October 29, 2024, the disclosures of which are incorporated herein by reference.

### [Background]

Unlike primary batteries, secondary batteries are rechargeable and have been widely researched and developed in recent years due to their potential for miniaturization and large capacity. The demand for secondary batteries as an energy source is increasing rapidly due to the increasing technological development and demand for mobile devices, as well as the increasing using of electric vehicles and energy storage systems that are emerging in response to environmental protection.

Secondary batteries are categorized into coin cell, cylindrical cell, prismatic cell, and pouch-type cell according to the shape of the battery case. In a secondary battery, the electrode assembly mounted inside the battery case is a charge and discharge power source consisting of a laminated structure of electrodes and separators.

Since secondary batteries are used continuously for long periods of time, it is necessary to effectively control the heat generated during the charging and discharging process. If the cooling of the secondary battery is not carried out smoothly, the temperature rise causes an increase in the current, and the increase in the current causes another increase in the temperature, causing a chain reaction of constant return, eventually leading to the catastrophic condition of thermal runaway.

To effectively dissipate the heat generated by the secondary battery, heat sinks (also known as cooling plates) with coolant flowing through them are widely used. Heat sinks are mounted on the bottom surface of a large group of secondary batteries, such as a battery pack with a plurality of secondary battery, and perform a cooling function by absorbing the heat generated inside the pack with a coolant and dissipating it to the outside.

Battery packs are applied in a wide range of technologies, and in recent years, battery packs are in high demand for electric vehicles. In order to increase the driving range per charge and improve driving performance, battery packs for electric vehicles are becoming increasingly high-capacity and high-performance. In addition, the current required for rapid charging and driving cycles of battery packs is getting larger and larger, which increases the heat generation of busbars and electrical components. Therefore, the cooling performance of the battery pack should also be improved.

The battery pack is mainly cooling the battery cells, while the electrical components are not cooled. As a result, the high heat of the electrical components is transferred to the battery cells through the busbar, causing the battery cells to heat up, which may cause performance degradation or thermal runaway of the battery cells.

### [Summary]

### [Technical Problem]

The present disclosure aims to provide a cooling structure of a battery pack that can make a high-performance battery pack safer by enabling efficient cooling of the battery cells as well as the electrical components by a heat sink constituting the bottom surface of the battery pack.

However, the technical problems that the present disclosure seeks to solve are not limited to those described above, and other problems not mentioned will be apparent to those of ordinary skill in the art from the description of the invention set forth below.

### [Technical Solution]

The present disclosure relates to a cooling structure for a battery pack, which in one example includes: a heat sink including a plurality of cooling flow paths; a plurality of battery assemblies mounted longitudinally and/or transversely on the heat sink; and an electrical component mounted on the heat sink at one side of the plurality of battery assemblies, wherein at least one of the plurality of electrical components has an insulating oil sealed therein, and heat accumulating in the insulating oil is discharged to the outside via a cooling flow path of the heat sink.

In an exemplary embodiment, the plurality of cooling flow paths is provided along the entire longitudinal direction of the heat sink.

For example, the heat sink is integrally formed with the cooling flow path by extrusion, and the plurality of cooling flow path is formed by a plurality of ribs spaced apart in the width direction along the entire longitudinal direction of the heat sink.

A thermal interface material (TIM) may be interposed between the heat sink and the electrical components sealed therein with insulating oil.

In addition, a fin structure may be interposed between the electrical component with insulating oil sealed inside and the heat sink.

The fin structure may be formed on a bottom surface of the electrical component having insulating oil sealed therein, or on an upper surface of the heat sink.

In addition, the thermal interface material may cover the entirety of the fin structure.

In an exemplary embodiment, the electrical component with insulating oil sealed therein may be a BDU (Battery Disconnection Unit).

In addition, the insulating oil may be also sealed inside a BMS (Battery Management System) connected to the BDU with a busbar.

In an exemplary embodiment, an electrical component with insulating oil sealed inside may be equipped with a relief valve.

### [Advantageous Effects]

According to the cooling structure of the battery pack as described above, the heat generated by the electrical components is accumulated in the insulating oil sealed inside before being transferred to the battery cells and discharged to the outside through the coolant flowing through the heat sink. Accordingly, this prevents heat from the electrical components generated from entering the battery cells, resulting in a higher performance battery pack.

Furthermore, by making the heat sink constitute the bottom surface of the battery pack an extruded heat sink so that the cooling flow path is formed from the front to the rear as a whole, efficient cooling can be achieved even for electrical components disposed on the front and/or rear of the heat sink.

However, the technical effects that can be obtained with the present disclosure are not limited to the effects described above, and other effects not mentioned will be clearly understood by those of ordinary skill in the art from the description of the invention set forth below.

### [Brief Description of the Drawings]

The following drawings accompanying this specification illustrate preferred embodiments of the present disclosure and serve to further illustrate the technical ideas of the disclosure in conjunction with the detailed description of the disclosure that follows, and the disclosure should not be construed as limited to the matters shown in such drawings.
FIG. 1 is a drawing of a battery pack with a cooling structure for the battery pack, according to one embodiment of the present disclosure.
FIG. 2 is an exploded perspective view of the battery pack of FIG. 1.
FIG. 3 is a drawing illustrating an example of an electrical component mounted in the battery pack of FIG. 1.
FIG. 4 is a cross-sectional view with an incision along line "A-A" of FIG. 1.
FIG. 5 is a drawing illustrating one embodiment of a structure that facilitates heat transfer between the heat sink and the electrical component.

### [Best Mode for Carrying out the Invention]

The present disclosure is subject to various modifications and can have many embodiments, certain of which are described in detail below.

However, this is not intended to limit the disclosure to any particular embodiment and is to be understood to include all modifications, equivalents, or substitutions that fall within the scope of the thought and skill of the present disclosure.

In the present disclosure, the terms "comprising" or "having" and the like are intended to designate the presence of the features, numbers, steps, actions, components, parts, or combinations thereof described, and are not intended to preclude the possibility of the presence or addition of one or more other features, numbers, steps, actions, components, parts, or combinations thereof.

Furthermore, when the present disclosure describes a layer, membrane, region, plate, etc. as being "on top of" another part, this includes not only when it is "directly above" another part, but also when there is another part in between. Conversely, when a layer, membrane, region, plate, etc. is described as being "underneath" another, this includes not only when it is "directly under" another, but also when there is another part in between. Also, in the present application, when a part is the to be disposed "on top of' another part, this may include not only being disposed on the upper part, but also being disposed on the lower part.

The present disclosure relates to a cooling structure for a battery pack, which, in one example, includes a heat sink including a plurality of cooling flow paths, a plurality of battery assemblies mounted longitudinally and/or transversely on the heat sink, and a plurality of electrical components mounted on a front and/or a rear of the heat sink, at least one of the plurality of electrical components having an insulating oil sealed therein, and heat accumulating in the insulating oil is dissipated to the outside through the cooling flow path of the heat sink.

According to the cooling structure of the battery pack as described above, the heat generated by the electrical components accumulates in the insulating oil sealed therein before being transferred to the battery cells and is discharged to the outside through the coolant flowing through the heat sink. As a result, it is possible to configure a battery pack with higher performance by preventing the heat of the electrical components from entering the battery cells.

### [Mode for Carrying out the Invention]

Hereinafter, a specific embodiment of the cooling structure of a battery pack according to the present disclosure will be described in detail with reference to the attached drawings. For reference, the directions of front and rear, up and down, left and right, which designate relative positions used in the following description are for the purpose of understanding the disclosure, and refer to the directions shown in the drawings unless otherwise defined.

### [First Embodiment]

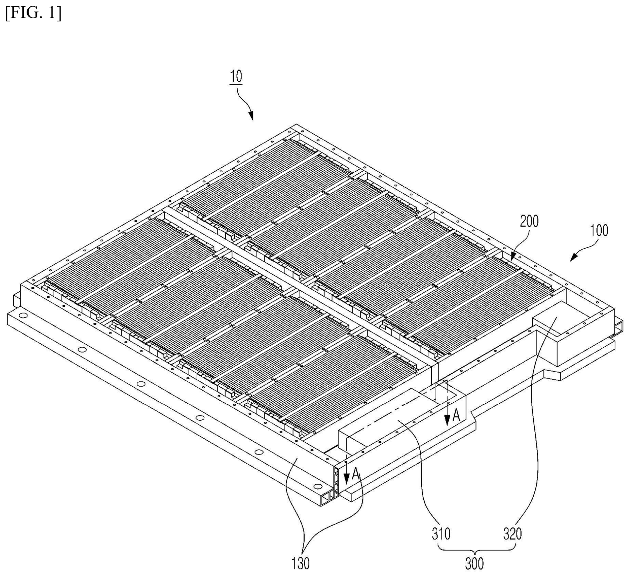

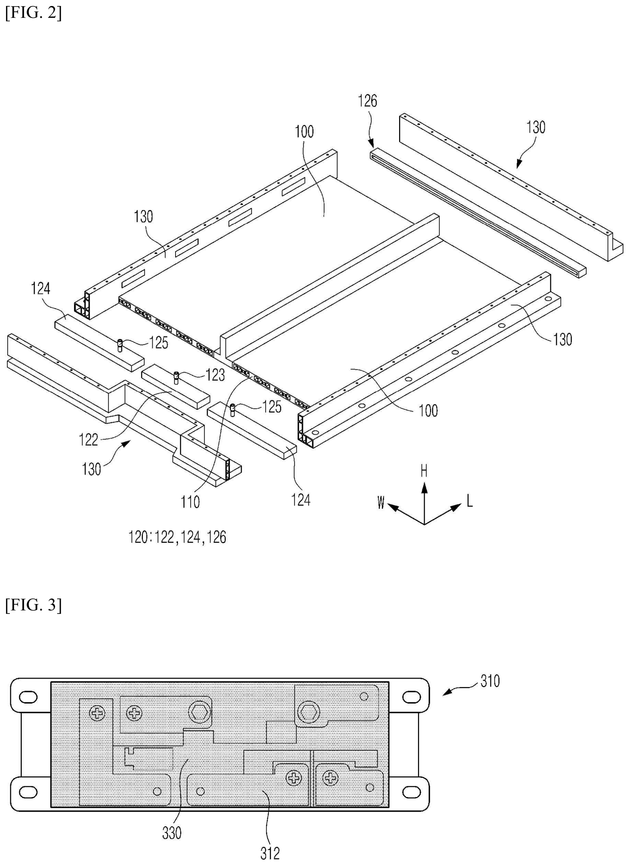

FIG. 1 is a drawing of a battery pack 10 with a cooling structure for the battery pack according to one embodiment of the present disclosure, FIG. 2 is an exploded perspective view of the battery pack 10, and FIG. 3 is a drawing of an example of an electrical component 300 mounted on the battery pack 10 of FIG. 1.

The present disclosure relates to a cooling structure for a battery pack, and more particularly to a cooling structure for a battery pack that can effectively cool the heat generated by the battery assembly 200 as well as the heat generated by the electrical component 300. Referring now to FIGS. 1 to 3, a cooling structure of a battery pack according to the present disclosure will be described in detail.

A battery pack 10 includes a heat sink 100 that functions as a bottom plate of a battery housing that accommodates at least one, and in most cases a plurality of, battery assemblies 200. The battery assembly 200 refers to an assembly of a plurality of battery cells structurally and electrically coupled together. Depending on the structure that couples the plurality of battery cells, the battery assembly 200 may be referred to by various terms, such as a battery module, a battery block, a battery unit, and the like. The present disclosure does not specifically limit the structure of the assembly of the plurality of battery cells mounted on the heat sink 100. The heat sink 100 includes a plurality of cooling flow paths 112. The plurality of cooling flow paths 112 provided in the heat sink 100 can be formed in a variety of ways. For example, the heat sink 100 can be divided into a brazed heat sink and an extruded heat sink, depending on its structure or manufacturing method. A brazed heat sink is a structure in which two plates are brazed together to form a flow path, which has a high degree of freedom in flow path design, but has a disadvantage in structural rigidity due to material degradation. On the other hand, extruded heat sinks, which are manufactured as a continuum by extrusion molding, have an advantage in structural rigidity, but only straight flow paths can be instantiated, resulting in a large number of ports, and pipes for connections take up space.

The cooling structure of the battery pack according to the present disclosure can be applied to a heat sink 100 of various specifications, but it is preferred that the plurality of cooling flow paths 112 is provided along the entire longitudinal direction of the heat sink 100. Specifically, the plurality of cooling flow paths 112 is preferably formed over an area occupied by the entirety of the battery assembly 200 and electrical components 300 accommodated or mounted within the battery pack 10.

The plurality of battery assemblies 200 is mounted longitudinally and/or transversely on top of the heat sink 100. And, at least one electrical component 300 is mounted on top of the heat sink 100. In relative arrangement to the battery assemblies 200, the at least one electrical components 300 may be disposed along one side of the heat sink 100, adjacent to the outermost battery assembly 200. The one side of the heat sink 100 on which the electrical components 300 are mounted may be a front or rear surface of the battery pack 10. The electrical components 300 refers to a component, module, or device that controls and monitors the charging and discharging of the entire battery assembly 200 to ensure that the battery pack 10 is fully functional.

Examples of the electrical components 300 of the battery pack 10 include a battery disconnection unit (BDU 310), a battery management system (BMS 320), and the like. The BDU 310 is a module that combines relays, current sensors, precharge resistors, fuses, etc. and is an important module that connects between the battery and the inverter to distribute high voltage and high current, and prevents accidents by performing emergency shutdown in the event of an abnormality. The BMS 320 is a system that is mounted to optimally manage the battery performance and lifespan, and measures the current, voltage, temperature, etc. of the battery through sensors and identifies them in advance to control the battery so that the battery can perform optimally.

When a coolant (e.g., cooling water) flows through a plurality of cooling flow paths 112 provided in the heat sink 100, the coolant cools the battery assembly 200 and electrical components 300 on the heat sink 100 so that they do not overheat. The battery pack 10 focuses on cooling the battery assembly 200 because the battery assembly 200 generates high heat during charging and discharging, and overheating of the battery cells can cause serious accidents such as thermal runaway or heat spreading. In comparison, cooling of the electrical components 300 is not considered separately, which may cause the battery pack 10 to heat up as the battery pack 10 becomes higher performance and higher capacity, as the high heat of the electrical components 300 is transferred to the battery assembly 200 via the busbar 312, causing the battery assembly 200 to heat up.

In order to solve the problem of overheating of the electrical components 300 adversely affecting the battery assembly 200, the cooling structure of the battery pack 10 according to the present disclosure is such that at least one of the plurality of electrical components 300 has an insulating oil 330 sealed therein, and the heat accumulating in the insulating oil 330 is discharged to the outside through the cooling flow path 112 of the heat sink 100. Insulating oil 330 refers to an oil used for the purpose of electrical insulation, typically a highly repined, low viscosity petroleum-based lubricant. While its primary purpose is electrical insulation, it can also serve as a cooling agent to prevent moisture ingress and dissipate heat generated.

The insulating oil 330 has a very high heat transfer rate and heat capacity compared to air, so it can act as a radiative cooler, and the heat generated inside the electrical components 300 is effectively accumulated in the insulating oil 330. The heat accumulated in the insulating oil 330 is transferred in the form of heat conduction to the heat sink 100 in contact with the surface of the electrical components 300, and the heat transferred to the heat sink 100 is transferred to the coolant and finally discharged to the outside of the battery pack 10.

Referring to FIGS. 1 and 2, the exemplarily illustrated heat sink 100 corresponds to an extruded heat sink. The heat sink 100 shown is extruded and integrally formed with a plurality of cooling flow paths 112, the plurality of cooling flow paths 112 being formed side-by-side by a plurality of ribs 110 spaced apart in the width direction W along the entire longitudinal direction L of the heat sink 100.

The open surface of the heat sink 100 is closed by a plurality of end plugs 120 to allow coolant to circulate along the plurality of cooling flow paths 112. The open surface of the heat sink 100 is the surface located at both ends of the longitudinal direction L, and due to the extruded nature of the heat sink 100, both ends in the longitudinal direction L of the heat sink 100 are open. For ease of description, the two open surfaces will be referred to as the first and second surfaces, respectively. Here, the longitudinal direction L corresponds to the extrusion molding direction of the heat sink 100, i.e., the direction in which the plurality of ribs 110 extend, and the width direction W corresponds to a direction orthogonal to the longitudinal direction L in a plane in which the plurality of cooling flow paths 112 are spaced apart.

The end plug 120 includes an inlet plug 122, an outlet plug 124, and a return plug 126. On the first surface located at the front side of the drawing, an inlet plug 122 is coupled at the center, and a pair of outlet plugs 124 is coupled on both sides thereof. The inlet plug 122 is disposed with an inlet port 123, and the outlet plugs 124 are disposed with an outlet port 125. Then, a return plug 126 is coupled to the second surface, which is located at the rear of the drawing. The cooling flow path 112 closed by the inlet plug 122 forms the inlet flow path, and the cooling flow path 112 closed by the outlet plug 124 forms the outlet flow path. The return plug 126 forms a return flow path connecting the inlet flow path with the outlet flow path. By forming such a flow path, the coolant introduced into the inlet flow path through the center inlet port 123 strikes the return plug 126 and branches to the left and right to enter the outlet flow path, and the coolant flowing through the outlet flow path is discharged through the outlet port 125. However, this configuration of the cooling flow path 112 of the heat sink 100 is only one example shown in the drawings, and the heat sink 100 may have a cooling flow path 112 of various other shapes and structures.

"130", not shown in the drawing, is a plate member, which surrounds the heat sink 100 on all sides, and the plate member 130 forms a space in the pack where the battery assembly 200 and electrical components 300 are mounted. And, a lid, not shown, forms a cover for the battery pack 10, whereby the interior of the battery pack 10 is protected from the outside.

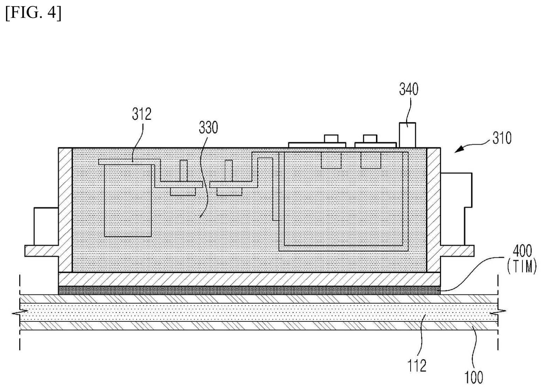

FIG. 4 is a cross-sectional view of an incision along the line "A-A" of FIG. 1. Referring to FIG. 4, a thermal interface material 400 (TIM) is interposed between the electrical components 300 with insulating oil 330 sealed therein and the heat sink 100. Such a thermal interface material 400 may also be interposed between the battery assembly 200 and the heat sink 100. Referring to FIG. 2, a thermal interface material 400 may be applied at a suitable thickness over the heat sink 100, and the battery assembly 200 and electrical components 300 may be mounted over the applied thermal interface material 400. The thermal interface material 400 may be a hardenable material, such as a thermal resin, that solidifies over time to form an adhesive state to fix the battery assembly 200 and electrical components 300 to the heat sink 100.

As mentioned above, the electrical components 300 with insulating oil 330 sealed inside may be a BDU 310 (Battery Disconnection Unit). The BDU 310 is connected to the battery assembly 200 by a busbar 312 and is a component that has a high heat output due to dealing with high voltage and high current. Since the BDU 310 and the battery assembly 200 are connected by the busbar 312, the high heat generated in the BDU 310 can be transferred to the battery assembly 200 through the busbar 312, which is thermally conductive. Thus, the heat transferred to the battery assembly 200 can be reduced by sealing the insulating oil 330 inside the BDU 310 to effectively dissipate heat to the heat sink 100.

Further, depending on the embodiment, a battery management system (BMS) 320 may also be connected to the BDU 310 by a busbar 312. In this case, it may be desirable to seal the insulating oil 330 inside the BMS 320 as well to prevent overheating.

And, referring to FIG. 4, the electrical components 300 with the insulating oil 330 sealed inside may include a relief valve 340. The relief valve 340 is a safety device that opens to relieve internal pressure when the pressure inside the electrical components 300 rises above a set value. If the heat generated by the electrical components 300 rises abnormally, the insulating oil 330 may boil locally, which may cause the pressure inside the electrical components 300 to rise rapidly. To respond to such an emergency, the electrical components 300 may be provided with a relief valve 340, and operation of the relief valve 340 may prevent the electrical components 300 from being damaged and all of the insulating oil 330 from leaking out.

### [Second Embodiment]

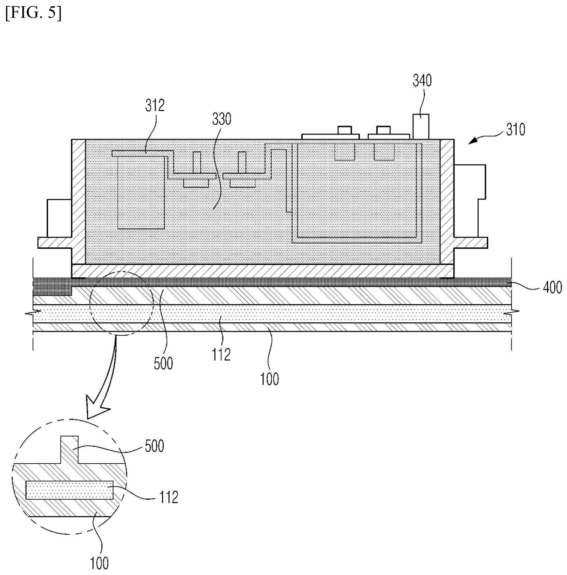

FIG. 5 is a drawing illustrating one embodiment of a structure that facilitates heat transfer between the heat sink 100 and the electrical components 300. Referring to FIG. 5, a fin structure 500 is interposed between the electrical components 300 with insulating oil 330 sealed therein and the heat sink 100. The fin structure 500 expands the heat transfer area, thereby allowing the heat from the electrical components 300 sealed with insulating oil 330 to be transferred more quickly to the heat sink 100. In other words, cooling of the electrical components 300 is facilitated by the fin structure 500, and the propagation of heat from the electrical components 300 to the battery assembly 200 is more effectively inhibited.

The fin structure 500 may be formed on a bottom surface of the electrical components 300 with insulating oil 330 sealed therein, or on the upper surface of the heat sink 100. FIG. 5 illustrates an embodiment in which the fin structure 500 is integrally formed on the upper surface of the heat sink 100. In forming the fin structure 500 on the heat sink 100, if the heat sink 100 is an extruded heat sink, the fin structure 500 may be formed along the longitudinal direction L of the heat sink 100, the same as the formation direction of the ribs 110. Thus, the fin structure 500 on an extruded heat sink may be formed across the entire longitudinal direction of the heat sink 100, so that the electrical components 300 as well as the bottom surface of the battery assembly 200 may have fin structures 500 thereon, and cooling of the battery assembly 200 may be facilitated.

The fin structure 500 and the thermal interface material 400 may be applied together. In order to fully utilize the heat dissipation capabilities of the fin structure 500 and the thermal interface material 400, the thermal interface material 400 may cover the entirety of the fin structure 500. That is, the fin structure 500 may preferably be covered by the thermal interface material 400, thereby excluding spaces in the heat transfer path between the electrical components 300 and the heat sink 100 that impede heat transfer, such as air layers.
The present disclosure has been described in more detail above with reference to the drawings and embodiments. However, it should be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

### [Description of Reference Numerals]

10: BATTERY PACK
100: HEAT SINK
110: RIB
112: COOLING FLOW PATH
120: END PLUG
122: INLET PLUG
123: INLET PORT
124: OUTLET PLUG
125: OUTLET PORT
126: RETURN PLUG
130: PLATE MEMBER
200: BATTERY ASSEMBLY
300: ELECTRICAL COMPONENT
310: BDU
312: BUSBAR
320: BMS
330: INSULATING OIL
340: RELIEF VALVE
400: THERMAL INTERFACE MATERIAL
500: FIN STRUCTURE

## Claims

1. A cooling structure of a battery pack comprising:
a heat sink comprising a plurality of cooling flow paths;
a plurality of battery assemblies mounted longitudinally and/or transversely on the heat sink; and
an electrical component mounted on the heat sink at a side of the plurality of battery assemblies, wherein
the electrical component has an insulating oil sealed therein, and heat accumulating in the insulating oil is discharged to the outside via a cooling flow path of the heat sink.

2. The cooling structure of the battery pack of claim 1, wherein
the plurality of cooling flow paths is provided along an entire longitudinal direction of the heat sink.

3. The cooling structure of the battery pack of claim 2, wherein
the heat sink is integrally formed with the plurality of cooling flow paths by extrusion, and
the plurality of cooling flow path is formed with a plurality of ribs spaced apart in a width direction along the entire longitudinal direction of the heat sink.

4. The cooling structure of the battery pack of claim 1, wherein
a thermal interface material (TIM) is interposed between the heat sink and the electrical components sealed therein with insulating oil.

5. The cooling structure of the battery pack of claim 4, wherein
a fin structure is interposed between the electrical component with insulating oil sealed inside and the heat sink.

6. The cooling structure of the battery pack of claim 5, wherein
the fin structure is formed on a bottom surface of the electrical component having insulating oil sealed therein, or on an upper surface of the heat sink.

7. The cooling structure of the battery pack of claim 5, wherein
the thermal interface material covers the entirety of the fin structure.

8. The cooling structure of the battery pack of claim 1, wherein
the electrical component with insulating oil sealed therein is a BDU (Battery Disconnection Unit).

9. The cooling structure of the battery pack of claim 8, wherein
the insulating oil is also sealed inside a BMS (Battery Management System) connected to the BDU via a busbar.

10. The cooling structure of the battery pack of claim 1, wherein
the electrical component with insulating oil sealed inside is equipped with a relief valve.
